# EUROPEAN PATENT APPLICATION

(11) **EP 2 323 313 A1**
(43) Date of publication of application: **18.05.2011**
(21) Application number: 09447058.0
(22) Date of filing: 17.11.2009
(51) Int. Cl.: H04L 12/28, H04L 29/08

(54) **Method of management of audio/video data and device implementing the method**

(71) Applicant: Thomson Telecom Belgium, 2650 Edegem (BE)
(72) Inventor: Van de Poel, Dirk, 2630 Aartselaar (BE)
(74) Representative: Huchet, Anne

(57) **Abstract**

The invention proposes, among others, a method of uploading, to at least one distant device in a distant network, of audio/video data from at least one local device in a local network, the local network and the distant network being interconnected by an intermediate device implementing the method, comprising a step of reception of an audio/video rendering request for rendering of the audio/video data on the intermediate device, and a step of uploading, upon reception of the rendering request, of the audio/video data from the at least one local device in the local network to the at least one distant device in the distant network, the at least one distant device being identified by at least one address.

## Description

### 1. Field of invention.

The invention relates to the field of management of audio/video data, and a device for implementing the method. In particular the invention relates to the optimization of management of audio/video data by an intermediate device that interconnects one or more local devices in a local network with one or more distant audio/video data storage devices in a distant network.

### 2. Technical background.

With the emergence of consumer multimedia devices such as for example digital photo cameras, camcorders and personal computers, the problem arises of how to safeguard the ever increasing quantity and size of audio/video data stored by these devices.

Solutions comprise connecting these consumer multimedia devices to a dedicated local mass storage device, but this is only a limited safeguard against accidental data loss due to damage, accidental erasure, or theft.

Other solutions comprise connecting these consumer multimedia devices in a local network and storing or copying of local content on a remote storage space in a distant network that is accessible through an Internet provider.

Although in-house communication between audio/video devices in a local network for audio/video data transfer and streaming of audio/video data is made easy through so-called plug-and-play possibilities offered by for example the Universal Plug and Play (UPnP) protocol, current prior-art solutions for managing of audio/video data, including storage and retrieval, are rather complex to put into place for a user of a local network. It typically requires installation of a dedicated, proprietary application, activation of an Internet account giving access to storage space in the distant network and use of the dedicated application to select and transfer local AV data to the storage space, all of which requires specific knowledge for the user and which limits the use of such a solution to users equipped with a personal computer having enough technical skills to configure and use the dedicated application.

Prior art solutions of managing of audio/video data are thus not optimized.

### 3. Summary of the invention.

The present invention aims at alleviating the inconveniences of prior art.

More precisely, the invention allows optimized management of audio/video data by an intermediate device that interconnects one or more local devices in a local network with one or more distant audio/video data storage devices in a distant network.

Throughout this document, the term "audio/video data" or "AV data" is used. This term comprises an audio file, a video file, a single audio data packet, a single video data packet, or a stream of audio packets or a stream of video packets or a combination of these, or a single still image or an image file or multiple image files, examples of which are: MP3 files or streams, WAV or other lossy or lossless encoded audio data, MPEG-2 or H.264 encoded data in form of packets, files or streams, a JPEG file, digital photo albums and a MPEG-2 Transport Stream comprising audio and/or video components.

Throughout this document, UPnP terminology is used to show particular embodiments of the invention. In particular, the present document refers to UPnP Control Points, MediaRenderers and MediaServers.

Two general classifications of devices are defined by the UPnP architecture: controlled devices (or simply "devices"), and Control Points. A controlled device functions in the role of a server, responding to requests from Control Points. Both Control Points and controlled devices can be implemented on a variety of platforms including personal computers and embedded systems. Multiple devices, Control Points, or both may be operational on the same network endpoint simultaneously. The Control Point uses UPnP to setup the transfer of the AV data, but the transfer is performed using a transfer protocol other than UPnP.

MediaRenderer devices are used in conjunction with one or more MediaServer device(s) to allow a Control Point to render AV data that is discovered on a MediaServer device within the network. In general terms, the process begins with the Control Point(s) discovering MediaServer and MediaRenderer devices within the network. After a Control Point locates the desired AV data on a MediaServer, the Control Point needs to identify a common transfer protocol and data format that can be used to transfer the AV data from the MediaServer to the MediaRenderer. After these transfer parameters have been established, the Control Point controls the flow of the AV data using for example, *AVTransport::Play(), AVTransport::Pause(), AVTransport::Stop(), AVTransport::Seek(),* etc. commands. The actual transfer of the AV data is performed directly by the MediaServer and MediaRenderer. The AV data transfer happens independently from the Control Point and does not involve UPnP itself. The Control Point uses UPnP to setup the transfer of the AV data, but the transfer is performed using an out-of band transfer protocol.

MediaServer devices also allow a Control Point to create a set of selection criteria to record content via the ScheduledRecording service. A Control Point can also discover recorded content on the MediaServer that was created by such a set of selection criteria.

Throughout this document, the term 'upload(-ing)' and 'download(-ing)' is used, meaning respectively the transmission of data to a device and the reception of data from a device.

To this effect, the invention proposes a method for uploading, to at least one distant device in a distant network, of audio/video data from at least one local device in a local network, the local network and the distant network being interconnected by an intermediate device implementing the method, the method comprising a step of reception of an audio/video rendering request for rendering of the audio/video data on the intermediate device, and a step of uploading, upon reception of said rendering request, of said audio/video data from said at least one local device in said local network to said at least one distant device, said at least one distant device being identified by at least one address.

According to a variant of the method for uploading, the method further comprises a step of providing, upon reception of a request for listing audio/video data stored by the intermediate device, of a list of audio/video data, the list comprising audio/video data uploaded from the at least one local device to the at least one address identifying the at least one distant device.

According to a variant of the method for uploading, the list of audio/video data comprises audio/video data stored on at least one local device in said local network.

According to a variant of the method for uploading, the audio/video rendering request is a Universal Plug and Play Audio Video Transport Service command.

According to a variant of the method for uploading, the request for listing is a Universal Plug and Play Media Server command.

According to a variant of the method for uploading, the uploading of the audio/video data is a real-time audio/video streaming.

According to a variant of the method for uploading, the method further comprises a step of obtaining said at least one address identifying said at least one distant device to said intermediate device.

According to a variant of the method for uploading, the at least one address is obtained through a configuration server that provides the intermediate device with configuration data.

The invention also proposes a method for downloading, from at least one distant device in a distant network, of audio/video data to at least one local device in a local network, the distant network and the local network being interconnected by an intermediate device implementing the method, the method comprising a step of reception of an audio/video rendering request for rendering of the audio/video data on the at least one local device in the local network, and a step of downloading, upon the reception of the rendering request, of the audio/video data from the at least one distant device to the at least one local device, the at least one distant device being identified by at least one address.

According to a variant of the method for downloading, the method further comprises a step of providing, upon reception of a request for listing audio/video data stored by the intermediate device, of a list of audio/video data, the list comprising audio/video data stored on the at least one distant device.

According to a variant of the method for downloading, the list of audio/video data comprises audio/video data stored on the at least one local device in the local network.

According to a variant of the method for downloading, the audio/video rendering request is a Universal Plug and Play Audio Video Transport Service command.

According to a variant of the method for downloading, the request for listing is a Universal Plug and Play Media Server command.

According to a variant of the method for downloading, the downloading of the audio/video data is a real-time audio/video streaming.

The invention also proposes an intermediate device for uploading, to at least one distant device in a distant network, of audio/video data from at least one local device in a local network, the intermediate device interconnecting the local network and the distant network, the intermediate device being characterized in that it comprises means of reception of an audio/video rendering request for rendering of the audio/video data from the at least one local device in the local network on the intermediate device and means for uploading, upon the rendering request, of the audio/video data from the at least one local device in the local network to at least one distant device, the at least one distant device being identified by at least one address.

The invention also proposes an intermediate device for downloading, from at least one distant device in a distant network, of audio/video data to at least one local device in a local network, the intermediate device interconnecting the local network and the distant network, the intermediate device being characterized in that it comprises means of reception of an audio/video rendering request for rendering of the audio/video data on the at least one local device in the local network and means for downloading, upon the rendering request, of the audio/video data from the at least one distant device to the at least one local device in the local network, the at least one distant device being identified by at least one address.

### 4. List of figures.

More advantages of the invention will appear through the description of particular, non-restricting embodiments of the invention. The embodiments will be described with reference to the following figures:
Figure 1 shows an example network infrastructure for prior art management of AV data;
Figure 2 shows an example architecture of an intermediate device used in prior art management of AV data, such as gateway 104 from figure 1;
Figure 3 shows an example network infrastructure that implements the method of management of AV data according to the invention;
Figure 4 shows an example architecture of an intermediate device implementing the method of management of AV data according to the invention, such as gateway 304 from figure 3;
Figure 5 shows a sequence diagram of the flow of data - and control messages between gateway 304 and the devices that surround it according to a particular embodiment of the invention; and
Figure 6 shows an algorithm for management of AV data, implemented for example by intermediate device 304 of figure 3 according to a particular embodiment of the invention.

### 5. Detailed description of the invention.

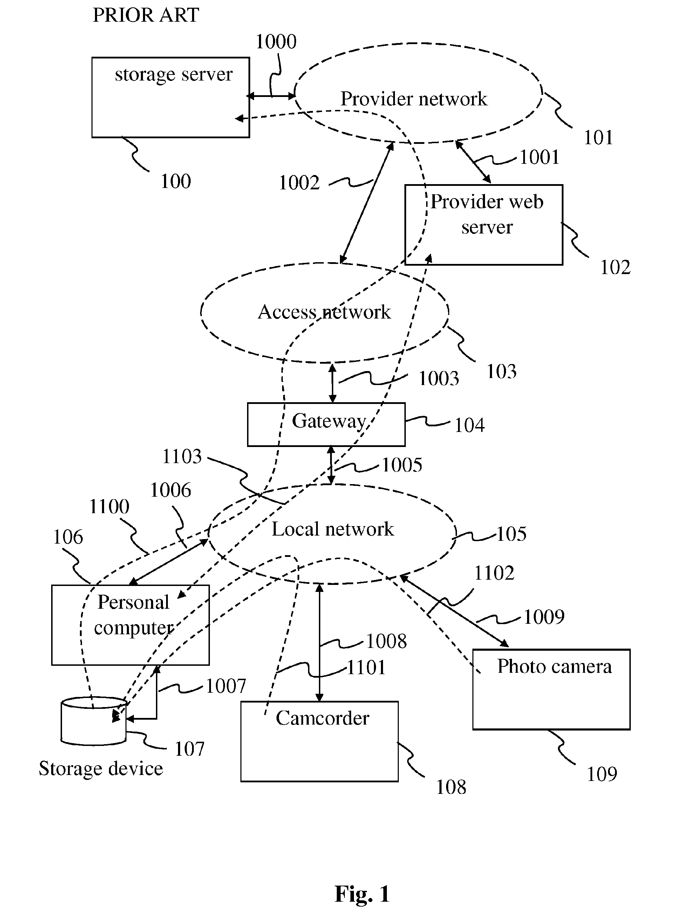

**Figure 1** shows an example network infrastructure for prior art management of AV data.

The infrastructure comprises:
- a distant AV data storage server 100;
- a provider network 101;
- a provider web server 102;
- an access network 103;
- a gateway device 104 ;
- a local network 105;
- a personal computer local device 106;
- a local mass storage 107;
- a camcorder local device 108; and
- a photo camera local device 109.

Distant AV data storage server 100 is connected to provider network 101 via bidirectional link 1000. Provider web server 102 is connected to provider network 101 via bidirectional link 1001. Provider network 101 is further connected to access network 103 via bidirectional link 1002. Access network 103 is connected to gateway 104 via bidirectional link 1005.

Personal computer PC 106 is equipped with local mass storage device 107, which is connected to PC 106 via bidirectional link 1007. PC 106 is connected to local network 105 via bidirectional link 1006. Camcorder 108 is connected to local network 105 via bidirectional link 1008. Photo camera 109 is connected to local network 105 via bidirectional link 1009. Local network 105 is connected to gateway 104 via bidirectional link 1005.

According to this example prior art embodiment, each of devices PC 106, camcorder 108 and photo camera 109 are UPnP - compatible devices.

The dotted arrows 1100 - 1103 illustrate control - and data flows that flow via the traversed devices and networks.

Dotted arrow 1102 illustrates storing of photos from photo camera 109 on local mass storage device 107 and traverses local network 105 and PC 106. Dotted arrow 1101 illustrates storing of movies from camcorder 108 on the local mass storage device 107 and traverses local network 105 and PC 106. Dotted arrow 1103 illustrates the access of PC 106 to a web application provided by Internet provider web server 102, for accessing storage provided by the Internet provider, and traverses local network 105, gateway 104 and access network 103. Dotted arrow 1100 illustrates storing of multimedia data from local mass storage device 107 to distant AV data storage server 100 and traverses PC 106, local network 105, gateway 104, access network 103, provider web server 102 and provider network 101.

When a user of the devices 104, 106, 108 and 109 of the local network 105 whishes to store photos from photo camera 109, the user opens an application on the PC 106 to transfer the photos and to store them on local mass storage device 107. Likewise, when the user wants to store movies from camcorder 108, the user opens an application on PC 106 to transfer the movies and to store them on local mass storage device 107. Now, when the user whishes to copy photos from photo camera 109 and movies from camcorder 108 stored on local mass storage device 107 to distant AV data storage server 100, the user connects to an Internet provider that provides the user with a dedicated web application via provider web server 102. This dedicated web application is rendered on PC 106 allows the user to select AV data stored on local mass storage device 107 and to copy or transfer selected data to distant AV data storage server 100 that is situated in the provider network.

As illustrated, PC 106 and local mass storage device 107 play an essential central role in this example prior art method of management of AV data.

The above discussed prior art implementation is an example prior art implementation. Other prior art implementations are possible, such as a distant AV data storage server that is directly connected to access network 103.

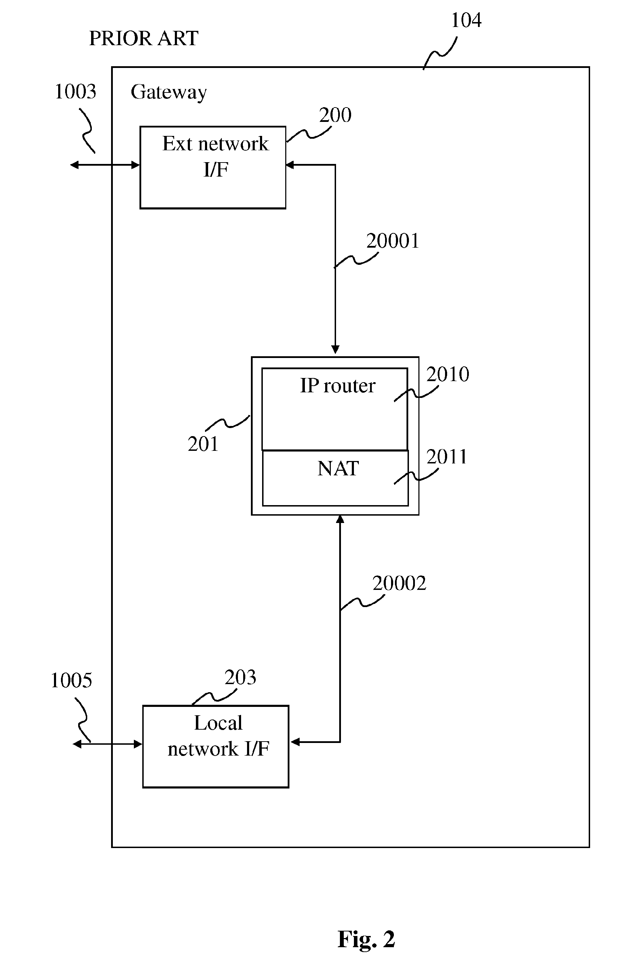

**Figure 2** shows an example architecture of an intermediate device used for prior art management of storage of AV data, such as gateway 104 from figure 1.

Gateway 104 comprises:
- an access network interface 200 for connection of gateway 104 to access network 103;
- a local network interface 203 for connection of gateway 104 to local network 105;
- a module 201 implementing at least:
- an IP router function 2010; and
- a Network Address Translator (NAT) 2011.

Gateway 104 is connected to local network 105 via bidirectional link 1005 and local network interface 203, and to access network 103 via bidirectional link 1003 and external network interface 200. External network interface 200 is connected to IP router/NAT 201 via bidirectional link 20001. Local network interface 203 is connected to IP router/NAT 201 via bidirectional link 20002.

IP router/NAT 201 provides IP routing for IP traffic between devices connected to the local network such as devices 106, 108 and 109 of figure 1. IP router/NAT 201 further provides routing for IP traffic between devices connected to local network 105 and devices connected via access network 103, such as for communication between devices 106, 108 and 109 of figure 1 and devices 102 and 100 of figure 1 that are accessible via access network 103 of figure 1. In particular, NAT 2011 provides network address translation for devices connected to local network 105, such as devices 106, 108 and 109 of figure 1.

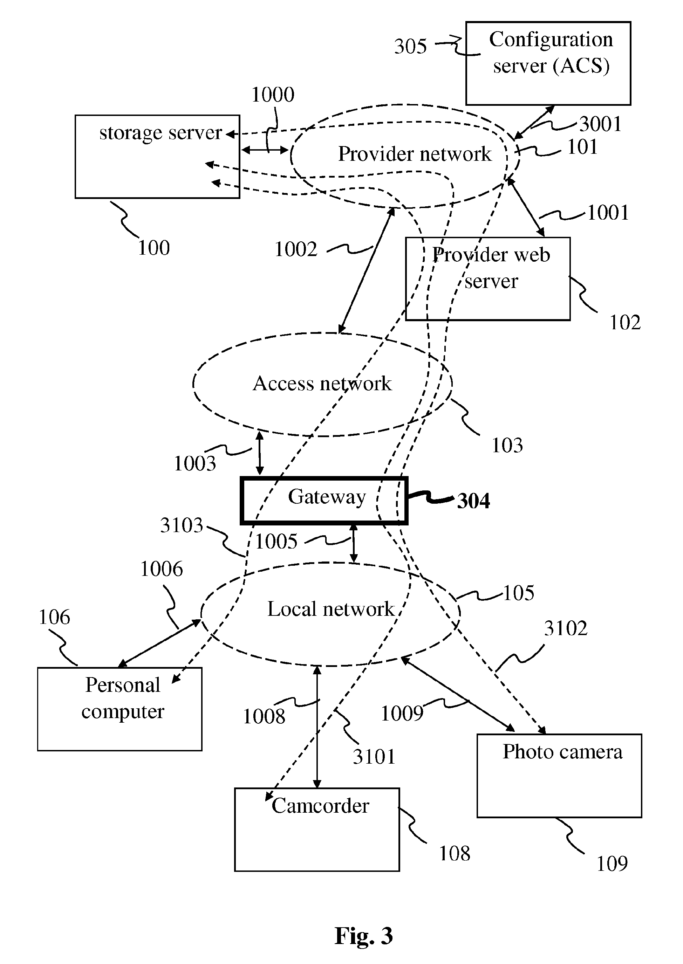

**Figure 3** shows an example network infrastructure where the method of the invention is applied.

This figure illustrates elements from fig 1 with exception of gateway 304, which replaces gateway 104, an additional configuration server or auto-configuration server (ACS) 305 that is connected to provider network 101 via bidirectional link 3001. Local mass storage device 107 of figure 1 is no longer present in figure 3.

The devices are interconnected in the same way as described for figure 1.

The figure illustrates that using the method of the invention, management of AV data is greatly simplified when compared to prior art. There is no longer need for a mass storage device such as mass storage device 107 of figure 1. There is no longer need for a PC doing centralized management of AV data. There is no longer need to connect to an Internet web provider application to have access to distant AV data storage device(s). Among other advantages procured by the invention when compared to prior art, each of the devices PC 106, camcorder 108 and photo camera 109 have direct access to storage space on distant AV storage server 100 for uploading or downloading, gateway 304 comprising an address that identifies the distant device 100. The address is for example configured by provider web server 102, or, according to a different embodiment, by configuration server ACS 305. For the latter variant, configuration server uses for example the TR-069 protocol defined by the Broadband Forum to configure device 304, and store among others the address of the distant device 100.

This is illustrated by dotted arrows 3101, 3102 and 3103. Dotted arrows 3101 illustrate that each of the devices 108, 109 and 106 directly access distant AV data storage server 100 for distant storage or uploading of local AV data and likewise can directly access AV data stored on distant AV data storage server 100 or download, without the need of first storing on a local mass storage device and then copying or transferring data to distant AV data storage server 100 via PC 106, as is the case according to the prior art illustrated by figure 1. The virtual connections 3101-3103 connect respectively camcorder 108, photo camera 109 and PC 106 to distant AV data storage server 100 and vice versa and traverse local network 105, gateway 304, access network 103, provider web server 102 and provider network 101.

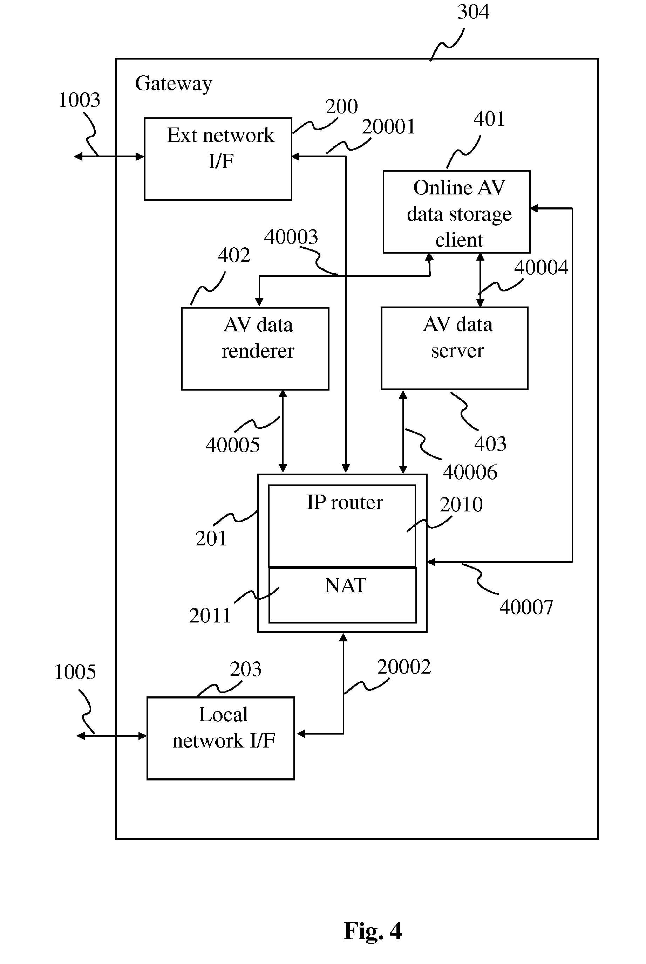

**Figure 4** shows an example architecture of an intermediate device implementing the method of management of AV data according to the invention, such as gateway 304 from figure 3.

Gateway 304 comprises the elements of gateway 104, which are not described here again, plus the following elements:
- an AV data renderer 402;
- an AV data server 403; and
- an online AV data storage client 401.

AV data renderer 402 is connected to IP router / NAT 201 via bidirectional link 40005, and to online AV data storage client 401 via bidirectional link 40003. AV data server 403 is connected to IP router / NAT 201 via bidirectional link 40006 and to online AV data storage client 401 via bidirectional link 40004. Online AV data storage client 401 is connected to IP router / NAT 201 via bidirectional link 40007. The other elements 200, 201 and 203 are interconnected as described for gateway 104 of figure 2.

According to a particular embodiment of the invention, the interface that AV data renderer 402 exposes to users of gateway 304 and/or to applications is a UPnP MediaRenderer and we will refer hereafter to AV data renderer 402 as "MediaRenderer 402". According to UPnP, a UPnP MediaRenderer can play AV data and render such data. However, instead of rendering and playing AV data on a display and speakers, the MediaRenderer 402 that is implemented in gateway 304 cooperates with the online AV data storage client 401 for uploading AV data to distant AV data storage server 100.

In this embodiment, UPnP devices PC 106, camcorder 108 and photo camera 109 implement an UPnP Control Point function. The UPnP Control Points PC 106, camcorder 108 and photo camera 109 automatically discover all available UPnP compatible MediaServers such as MediaServer 403 and MediaRenderers such as MediaRenderer 402 on local network 105 by listening for UPnP device initiated presence announcements or by initiation of a UPnP discovery message, and these Control Points are then able to use MediaServer 403 and MediaRenderer 402.

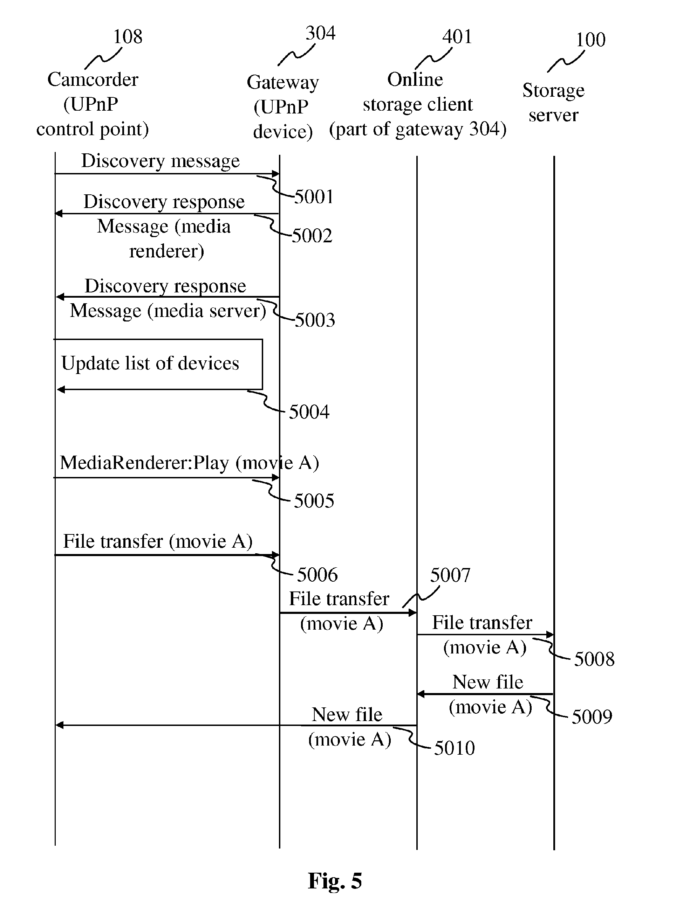

According to the invention, whenever devices 106, 108 and 109 want to store AV data on distant AV data storage device 100 (uploading) they use MediaRenderer 402 on gateway 304 to do so. Whenever PC 106, camcorder 108 and photo camera 109 want an overview of all available AV data that is stored on the distant AV storage device 100, they use MediaServer 403, which Control Points 106, 108 and 109 with the possibility to list the AV data that is already stored on distant AV data storage device 100. Likewise, devices 106, 108 and 109 use MediaServer 403 to get AV data from distant AV data storage server 100 (downloading), using for example the MediaServer's AVTransport::play() command. The interaction between the devices is best illustrated by means of figure 5, which is discussed further on.

The MediaServer 403 also provide functionality to transfer (uploading) AV data from a local device such as PC 106, camcorder 108 and photo camera 109 to distant AV storage device 100 on an automatic basis using the UPnP Scheduled Recording service. This has the advantage, that AV data from the local devices are regularly and automatically transferred or copied (uploaded) to the distant AV storage device 100, for example to provide an automatic regular back-up function.

According to a variant embodiment, the devices 106, 108 and 109 are UPnP media servers (advertising and being source of AV data), and a UPnP control point is implemented on another device in the home network, for example a TV set. By means of the control point implemented on the TV set, the control point uses the invention implemented in gateway 403 to upload AV data from devices 106, 108 and 109 to the distant storage 100, or downloads AV data from distant storage to one of the devices 106, 108 and 109 connected to the local network.

According to the above described embodiments, the method of the invention is implemented on gateway 403. Implementing the method of the invention on an intermediate device such as gateway 403 has the advantage to allow a maximum availability of the services provided by the invention, because in general a gateway is an 'always on' device. Nothing however prevents implementing the invention on any other intermediate device, as long as it is compatible with the invention. As an example, PC 106 can thus very well implement the invention, in addition to gateway 304 or instead of gateway 304.

**Figure 5** shows a sequence diagram of the flow of data - and control messages between gateway 304 and the devices that surround it according to a particular embodiment of the invention.

The diagram comprises four vertical lines, representing respectively:
- camcorder 108, which implements as mentioned an UPnP Control Point;
- gateway 304, which implements a UPnP device;
- online AV data storage client 401 which is one of the components inside gateway 304; and
- distant AV data storage server 100.

Camcorder 108 discovers all UPnP devices by initiating a UPnP discovery message 5001, which is illustrated by arrow 5001 from camcorder 108 to gateway 304. The gateway 304 advertises its internal UPnP modules MediaRenderer 402 and MediaServer 403, illustrated by respectively arrow 5002 and arrow 5003 from gateway 304 to camcorder 108. Upon reception of the discovery response messages 5002 and 5003, camcorder 108 updates its internal list of UPnP devices, which it shows for example to a user by means of an application, an action which is illustrated by arrow 5004 that loops on camcorder 108, to illustrate that the action is executed by camcorder 108. When the user decides to transfer or copy (uploading) movie 'A' from camcorder 108 to distant AV data storage device 100, he then uses the MediaRenderer 402 'play' function. This 'play' function is an example of an audio/video rendering request and is illustrated by arrow 5005 from camcorder 108 to gateway 304. Such a MediaRenderer 'play' function is for example implemented using UPnP's AVTransport Service command. The MediaRenderer 402 then transfers (uploads) the AV data movie 'A' from camcorder 108 to gateway 304, illustrated by arrow 5006 from camcorder 108 to gateway 304, and MediaRenderer 402 transfers (uploads) the AV data further to online AV data storage client 401 inside gateway 304, which is illustrated by arrow 5007 from gateway 304 to online AV data storage client 401. Online AV data storage client 401 in turn transfers (uploads) the AV data to distant AV data storage server 100, illustrated by arrow 5008 from online AV data storage client 401 to distant AV data storage server 100. When (part of-) the transferred (uploaded) AV data is stored on distant AV data storage server 100, distant AV data storage server updates online AV data storage client 401, which is illustrated by arrow 5009 from distant AV data storage server 100 to online AV data storage client 401. Online AV data storage client 401 in turn informs camcorder 108 of the updated contents of distant AV data storage device 100, which is illustrated by arrow 5010 from online AV data storage client 401 to camcorder 108. The example embodiment the sending of information is done upon initiative of the MediaServer 403 on gateway 304.

The described flow of data is a mere example embodiment. Other embodiments are possible while still remaining compatible with the invention.

According to a variant embodiment, gateway 304 transmits upon reception by MediaServer 403 of a request for transmission of a list of audio/video data from camcorder 108 the list of audio/video data present on distant audio/video data storage device to the camcorder 108. Such a request is for example a UPnP ContentDirectory::Browse() command. According to a variant embodiment, MediaServer includes in the list of AV data that is transmitted upon request the list of AV data present on a local device, such as a local mass storage device present in the local network.

According to a variant embodiment, storing of AV data from camcorder 108 to distant AV data server 100 (uploading) is done without any user intervention, for example being initiated by a data transfer or copy (uploading) application running on camcorder 108 that automatically and periodically transfers or copies (uploads) data stored on the camcorder 108. Such a function can for example be implemented using a MediaServer ScheduledRendering service.

In a variant embodiment, the user application, which is used to initiate transfer (uploading) of movie 'A' from camcorder 108 to MediaRenderer 402, hides the fact that a function 'play' of MediaRenderer 402 is used to transfer (uploading) the AV data. In a still more advanced variant embodiment, the user application may totally hide to the user the fact that the distant AV data storage device is addressed by the gateway UPnP modules MediaRenderer 402 and MediaServer 403, so that the application directly proposes AV data transfer (uploading) access to distant AV data storage server 100, as in a file explorer type application where the distant AV data storage server 100 is simply represented as a network mass storage device. The application then shows contents of the distant AV data storage device as represented in a directory, to which contents can be transferred (uploaded) using so-called 'drag & drop' or 'copy-paste' operations, while hiding all of the technical complexities from the user.

According to the above described example embodiments, camcorder 108 is described as a source of AV data, but the reader will understand that any type of device can be used as AV data source in the invention, as long as the device is compatible with the invention. Example AV data source devices that are compatible with the invention are devices 106 and 109 of figure 3.

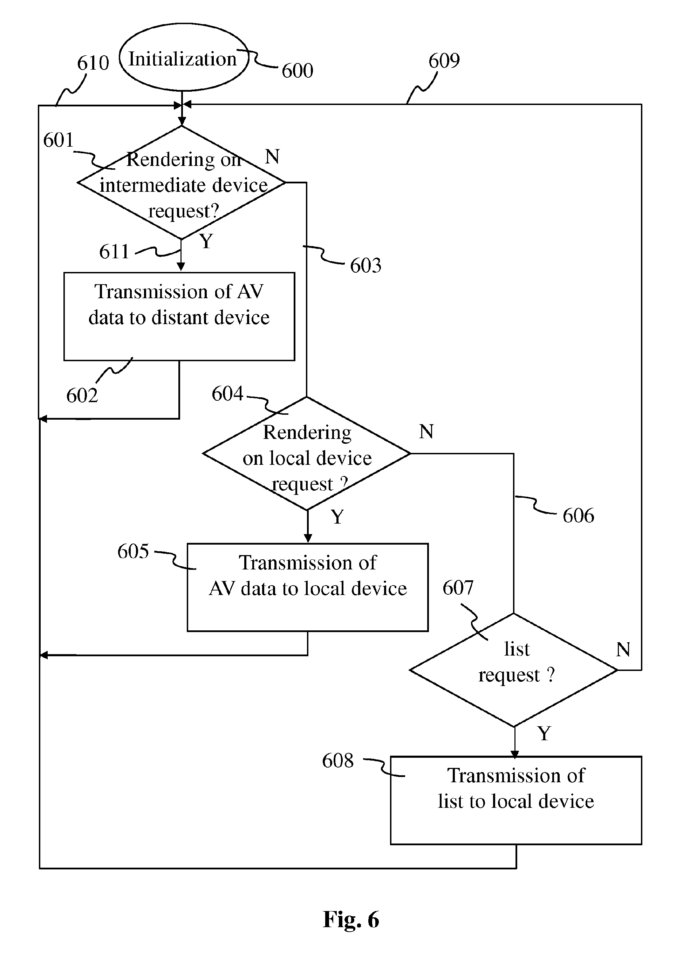

**Figure 6** shows an algorithm for management of audio/video data, implemented for example by device 304 of figure 3 according to a particular embodiment of the invention.

The algorithm starts with a step 600 of initialization of variables needed for its execution. Then, in a decisional step 601, it is verified if a request for rendering (5005) AV data on intermediate device 304 is received from a local device, such as devices 106, 108 and 109 of figure 3. In the affirmative, step 602 is executed, in which AV data is transmitted (uploaded) to a distant device, for example to distant AV data storage device 100 of figure 3, and the algorithm reiterates with execution of step 601. In the negative, decisional step 604 is executed, where it is verified if an AV data rendering request for rendering on one or more local devices such as 106, 108 or 109 in local network 105 of AV data present on a distant AV data storage device is received, such as distant AV data storage device 100 of figure 3. In the affirmative, step 605 is executed, in which AV data is transmitted (downloaded) from a distant device, such as distant AV data storage device 100 of figure 3, to a local device, such as to devices 106, 108 or 109 of figure 3, after which the algorithm reiterates with execution step 601. In the negative, decisional step 607 is executed, in which it is verified if a request for transmission of a list of AV data comprising data present on a distant AV data storage device such as device 100 of figure 3 is received from a device such as device 106, 108 or 109 of figure 3. If so, the list is transmitted to the device in step 608 and the algorithm reiterates with the execution of step 601.

The described embodiment of an algorithm implementing the invention is given for illustration purposes. Other implementations are possible that are compatible with the invention, such as particular embodiments where steps of the method are executed in a parallel way.

The embodiments of the invention are described using UPnP; the reader of the present document will however understand that the method of the invention can be used with other types of networking protocols such as Bonjour from Apple Inc.

According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

According to a particular embodiment, a device implementing the method of the invention is a personal computer, equipped or not with dedicated hardware.

According to a particular embodiment of the invention, the AV data that is uploaded or downloaded is transferred as real-time audio/video streaming. This has the advantage to be no different from audio/video streaming to, for example, watch a video, and thus an uploading or a downloading takes no more bandwidth on the local and the distant network than normal video streaming. According to a variant embodiment, the AV data that is uploaded or downloaded is transferred with faster or lower transmission speed as for real-time audio/video streaming. In particular, this allows to cope with (temporary) bandwidth reduction and reduce up- or downloading speed or, on the contrary, to make use of (temporary) available bandwidth, for example for up-or downloading with faster than real-time audio/video streaming speed.

## Claims

**1.** Method for uploading, to at least one distant device (100) in a distant network (103, 101), of audio/video data from at least one local device (106, 108, 109) in a local network (105), said local network (105) and said distant network (103, 101) being interconnected by an intermediate device (304) implementing the method, said method being **characterized in that** it comprises the following steps:
- reception (611) of an audio/video rendering request (5005) for rendering of said audio/video data on said intermediate device (304); and
- uploading (602, 5007, 5008), upon reception of said rendering request (5005), of said audio/video data from said at least one local device (106, 108, 109) in said local network (105) to said at least one distant device (100), said at least one distant device being identified by at least one address.

**2.** Method according to claim 1, **characterized in that** the method comprises a step of providing, upon reception of a request for listing audio/video data stored by said intermediate device (304), of a list of audio/video data, said list comprising audio/video data uploaded (602, 5007, 5008) from said at least one local device (106, 108, 109) to said at least one address identifying said at least one distant device (100).

**3.** Method according to claim 1 or 2, **characterized in that** said list of audio/video data comprises audio/video data stored on at least one local device (106, 108, 109) in said local network (105).

**4.** Method according to any of claims 1 to 3, **characterized in that** said audio/video rendering request (5005) is a Universal Plug and Play Audio Video Transport Service command.

**5.** Method according to any of claims 1 to 4, **characterized in that** said request for listing is a Universal Plug and Play Media Server command.

**6.** Method according to any of claims 1 to 5, **characterized in that** said uploading (602, 5007, 5008) of said audio/video data is a real-time audio/video streaming.

**7.** Method according to any of claims 1 to 6, **characterized in that** the method comprises a step of obtaining said at least one address identifying said at least one distant device (100) to said intermediate device (304).

**9.** Method according to claim 8, **characterized in that** said at least one address is obtained through a configuration server (305) that provides said intermediate device (304) with configuration data.

**10.** Method for downloading, from at least one distant device (100) in a distant network (103, 101), of audio/video data to at least one local device (106, 108, 109) in a local network (105), said distant network (103, 101) and said local network (105) being interconnected by an intermediate device (304) implementing the method, said method being **characterized in that** it comprises the following steps:
- reception of an audio/video rendering request for rendering of said audio/video data on said at least one local device (106, 108, 109) in said local network (105); and
- downloading, upon said reception of said rendering request, of said audio/video data from said at least one distant device (100) to said at least one local device (106, 108, 109), said at least one distant device (100) being identified by at least one address.

**11.** Method according to claim 10, **characterized in that** the method comprises a step of providing, upon reception of a request for listing audio/video data stored by said intermediate device (304), of a list of audio/video data, said list comprising audio/video data stored on said at least one distant device (100).

**12.** Method according to claim 10 or 11, **characterized in that** said list of audio/video data comprises audio/video data stored on said at least one local device (106, 108, 109) in said local network (105).

**13.** Method according to any of claims 10 to 12, **characterized in that** said audio/video rendering request is a Universal Plug and Play Audio Video Transport Service command.

**14.** Method according to any of claims 10 to 13, **characterized in that** said downloading of said audio/video data is a real-time audio/video streaming.

**15.** Intermediate device (304) for uploading, to at least one distant device (100) in a distant network (103, 101), of audio/video data from at least one local device (106, 108, 109) in a local network (105), said intermediate device (304) interconnecting said local network (105) and said distant network (103, 101), said intermediate device (304) being **characterized in that** it comprises the following means:
- means of reception (203, 201, 402) of an audio/video rendering request (5005) for rendering of said audio/video data from said at least one local device (106, 108, 109) in said local network (105) on said intermediate device (304); and
- means for uploading (402, 401, 200), upon said rendering request (5005), of said audio/video data from said at least one local device (106, 108, 109) in said local network (105) to at least one distant device (100), said at least one distant device (100) being identified by at least one address.
